# EUROPÄISCHE PATENTSCHRIFT

(11) **EP 0 370 402 B1**
(45) Veröffentlichungstag und Bekanntmachung des Hinweises auf die Patenterteilung: **26.01.1994**
(21) Anmeldenummer: 89121300.1
(22) Anmeldetag: 17.11.1989
(51) Int. Cl.: B60R 22/20

(54) **Vorrichtung zur Höhenverstellung eines Sicherheitsgurtbeschlages**
Device for the height adjustment of a safety belt fitting
Dispositif de réglage en hauteur d'une ferrure de ceinture de sécurité

(30) Priorität: 23.11.1988 DE 3839511
(43) Veröffentlichungstag der Anmeldung: 30.05.1990
(73) Patentinhaber: TRW REPA GMBH, 73553 Alfdorf (DE)
(72) Erfinder: Biller, Joachim, D-7078 Leinzell (DE)
(74) Vertreter: Degwert, Hartmut, Dipl.-Phys.

(56) Entgegenhaltungen:
- DE-A- 3 225 862
- DE-A- 3 431 678
- DE-A- 3 733 026
- GB-A- 2 204 780

## Beschreibung

Die Erfindung betrifft eine Vorrichtung zur Höhenverstellung eines Sicherheitsgurtbeschlages in Kraftfahrzeugen, mit einer zur Befestigung am Fahrzeug eingerichteten, lastaufnehmenden Führungsschiene, einem in dieser Führungsschiene verschiebbar aufgenommenen Verankerungselement, an dem der Sicherheitsgurtbeschlag befestigt ist, und einer Rastvorrichtung aus mehreren in Längsrichtung der Führungsschiene beabstandeten Rastelementen, einem mit diesen zusammenwirkenden Rastelement am Verankerungselement und einem im betätigten Zustand die Verrastung zwischen den Rastelementen aufhebenden Löseelement.

Derartige Vorrichtungen sind in zahlreichen Ausführungen bekannt Z.B. DE-A- 34 31 678 Gewöhnlich ist das Löseelement einer solchen Vorrichtung als Hebel ausgebildet, durch dessen Betätigung eine federbeaufschlagte Rastklinke oder dergleichen in ihre Lösestellung bewegt wird. Die Rastklinke ist an dem verschiebbaren Verankerungselement gelagert und wirkt mit in Längsrichtung voneinander beabstandeten Rastöffnungen der Führungsschiene zusammen. Solange das Löseelement betätigt bleibt, kann die Rastklinke nicht in eine der Rastöffnungen einfallen. Bei Abwärtsverstellung des Sicherheitsgurtbeschlages kann daher leicht die sich in der gewünschten Höhe befindende Rastöffnung übersprungen werden. Ein zielsicheres Auffinden der jeweils nächstkommenden Rastöffnung erfordert den Einsatz erhöhter Aufmerksamkeit von Seiten des Benutzers.

Der Erfindung liegt die Aufgabe zugrunde, eine Vorrichtung der eingangs angegebenen Art dahingehend weiterzubilden, daß ein zielsicheres Einstellen des Sicherheitsgurtbeschlages in die jeweils nächsttiefere Raststellung leicht möglich ist.

Diese Aufgabe wird bei der gattungsgemäßen Vorrichtung erfindungsgemäß dadurch gelöst, daß das Löseelement einen Blockieransatz aufweist, der im betätigten Zustand des Löseelementes und bei Abwärtsverschiebung des Verankerungselementes eine Bahn beschreibt, die auf das jeweils nächsttiefere der Rastelemente der Führungsschiene trifft, welche mit Ausnahme des untersten Rastelementes jeweils als gegen Federkraft aus der normalen Raststellung in eine Lösestellung bewegbare Klinke ausgebildet sind, daß der Blockieransatz im betätigten Zustand des Löseelementes und bei Abwärtsverschiebung desselben auf eine Rampenfläche einer bewegbaren Klinke trifft, daß jede der bewegbaren Klinken quer zur Richtung der Abwärtsverschiebung federelastisch auslenkbar gelagert ist und durch Auflaufen des Blockieransatzes ausgelenkt wird, und daß der Blockieransatz im unbetätigten Zustand des Löseelementes von der Klinke zurückweicht, woraufhin diese in ihre unausgelenkte Stellung zurückkehrt, und bei erneuter Betätigung des Löseelementes ein Betätigungsansatz desselben die Klinke in ihre Lösestellung drückt und den Weg für eine weitere Abwärtsverschiebung freigibt. Durch diese Ausgestaltung der Höhenverstellvorrichtung ist es nicht möglich, eine Raststellung ungewollt zu überspringen. Solange das Löseelement betätigt wird, um eine Abwärtsverstellung des Sicherheitsgurtbeschlages vorzunehmen, bewegt sich der Blockieransatz des Löseelementes auf einer Bahn, die zwangsläufig auf das nächsttiefere Rastelement auftrifft. Wird aber nach Aufhebung der Verrastung die Betätigung des Löseelementes unterlassen und die Abwärtsbewegung des Sicherheitsgurtbeschlages beispielsweise durch direktes Angreifen an diesem Beschlag fortgesetzt, so erfolgt die Verrastung automatisch in der nächsttieferen Raststellung.

Entgegen herkömmlichen Ausbildungen von Höhenverstellvorrichtungen für Sicherheitsgurtbeschläge, bei welchen die Rastelemente der Führungsschiene als Rastöffnungen ausgebildet sind und das Rastelement am Verankerungselement eine Klinke bildet, ist bei der Vorrichtung nach der Erfindung vorgesehen, daß die Rastelemente der Führungsschiene jeweils als gegen Federkraft aus der normalen Raststellung in eine Lösestellung bewegbare Klinke ausgebildet sind. Bei der erfindungsgemäßen Vorrichtung ist weiterhin Vorsorge dafür getroffen, daß die Abwärtsbewegung des Verankerungselementes, an welchem der Sicherheitsgurtbeschlag befestigt ist, in zusammenhängenden Abschnitten erfolgt. Bei der nachveröffentlichten Höhenverstellvorrichtung, die Gegenstand der Patentanmeldung DE-A- 37 33 026.8 derselben Anmelderin ist, wird die Abwärtsbewegung des Verankerungselementes durch Anstoßen des am Löseelement angeformten Blockieransatzes an dem nächsttieferen Rastelement der Führungsschiene angehalten, jedoch kann nach dem Loslassen des Löseelementes eine Abwärtsbewegung des Verankerungselementes über eine Strecke von einigen Millimetern erfolgen, bis das starre Anschlagteil des verschiebbaren Verankerungselementes an der Oberkante desselben Rastelementes der Führungsschiene anstößt. Eine solche Aufteilung der Abwärtsbewegung des Verankerungselementes auf zwei aufeinanderfolgende Abschnitte wird durch die erfindungsgemäße Ausbildung der Vorrichtung vermieden. Bei betätigtem Lösungselement und Abwärtsverschiebung des Verankerungselementes läuft zunächst der Blockieransatz des Löseelementes auf der Rampenfläche des Rastelementes der Führungsschiene auf und lenkt dieses quer zur Verschiebungsrichtung aus, bis der Blockieransatz an der Basis der Rampenfläche angelangt ist und die weitere Abwärtsbewegung gesperrt wird. Wenn der Sicherheitsgurtbeschlag nicht in der so erreichten Höhe verbleiben soll, wird das Löseelement erneut betätigt und drückt mit seinem Betätigungsansatz gegen die nun in ihre Raststellung zurückgeschwenkte, das Rastelement der Führungsschiene bildende Klinke, um diese in ihre Lösungsstellung zu drücken. Durch anhaltende Betätigung des Löseelementes wird das Verankerungselement weiter nach unten verschoben, bis der Blockieransatz des Löseelementes auf das nächsttiefere Rastelement der Führungsschiene trifft, wo sich der Vorgang wiederholen kann, wenn dies nicht das tiefste Rastelement der Führungsschiene ist.

In vorteilhafter Weiterbildung der Erfindung ist das Rastelement des Verankerungselementes als starres Anschlagteil ausgebildet, in dessen Bewegungsbahn die Klinken in ihrer Raststellung hineinragen. Die zwangsläufige Verrastung in der jeweils nächsttieferen Raststellung wird bei dieser Ausbildung auf besonders einfache Weise erreicht.

Bei einer weiteren vorteilhaften Ausführungsform ist das Löseelement als zweiarmiger Hebel ausgebildet, wobei der eine Hebelarm als Betätigungshebel dient und an dem anderen Hebelarm sowohl der Betätigungsansatz als auch der Blockieransatz gebildet sind. Der Hebel ist vorzugsweise innerhalb eines durch Anschläge begrenzten Bereiches verschwenkbar und wird durch eine Feder in die unbetätigte Stellung vorbelastet.

Weitere Merkmale und Vorteile der Erfindung ergeben sich aus der folgenden Beschreibung einer bevorzugten Ausführungsform und aus der Zeichnung, auf die Bezug genommen wird. In der Zeichnung zeigen:
- Fig. 1: einen schematischen Längsschnitt der Vorrichtung;
- Fig. 1a: eine bewegliche Klinke, die ein Rastelement der Führungsschiene der Vorrichtung bildet; und
- Fig. 2 bis 9: schematische Längsschnitte der Vorrichtung in verschiedenen Stellungen.

Eine lastaufnehmende Führungsschiene 10, die zur Befestigung am B-Pfosten eines Kraftfahrzeugs bestimmt ist, bildet innenseitig eine lineare Führungsbahn für ein gleitverschiebbares Verankerungselement, das allgemein mit 12 bezeichnet ist. An diesem Verankerungselement 12 ist ein Sicherheitsgurtumlenkbeschlag 14 für einen Sicherheitsgurt 16 schwenkbar mittels eines Schraubbolzens 18 und einer hülsenförmigen Schraubmutter 20 verankert. Das lastaufnehmende Element des Verankerungselementes 12 ist durch eine Platte 22 aus Stahl gebildet, welche zwischen zwei äußeren Gehäuseteilen 24, 26 des Verankerungselementes 12 eingefaßt ist und eine Öffnung aufweist, durch welche der Schraubbolzen 18 hindurchgeführt ist.

Die Führungschiene 10 weist in ihrem mittleren Steg zwei rechtwinklige Öffnungen 28, 30 auf, deren unterer Rand jeweils als Widerlager einer plattenförmigen Klinke 32, 34 ausgebildet ist, die aber im unbelasteten Zustand in geringem Abstand von diesem Widerlager verbleibt. Die Klinken 32, 34 sind um den Bereich ihrer unteren Kante verschwenkbar zwischen einer aus der Ebene des mittleren Steges der Führungsschiene 10 herausgeneigten Raststellung, in die sie jeweils durch eine gleichzeitig als Halterung dienende Blattfeder 36 vorgespannt werden, und einer annähernd in dieser Ebene liegenden Lösestellung, in der sie in die zugehörige Öffnung 28 bzw. 30 eintauchen. Die Lage der Öffnungen 28, 30 entspricht jeweils einer Raststellung des Verankerungselementes 12 innerhalb der Führungsschiene 10. Bei der gezeigen Ausführungsform sind insgesamt drei Raststellungen vorgesehen, wovon die beiden oberen den Öffnungen 28, 30 entsprechen und die unterste durch ein festes Rastelement 38 bestimmt ist, das aus dem mittleren Schenkel der Führungsschiene 10 in Einwärtsrichtung ausgestellt ist.

Die Klinken 32, 34 sind ferner quer zur Richtung der Abwärtsverschiebung des Verankerungselementes 12 und quer zur Richtung ihrer Verschwenkung auslenkbar, wobei sie einen Kreisbogen um den obersten Befestigungspunkt der Blattfeder 36 an der Führungsschiene 10 über einige Winkelgrade beschreiben. Die Auslenkbewegung der Klinken 32, 34 kommt durch das Auflaufen eines weiter unten beschriebenen Blockieransatzes an einem gleichfalls weiter unten beschriebenen Löseelement zustande.

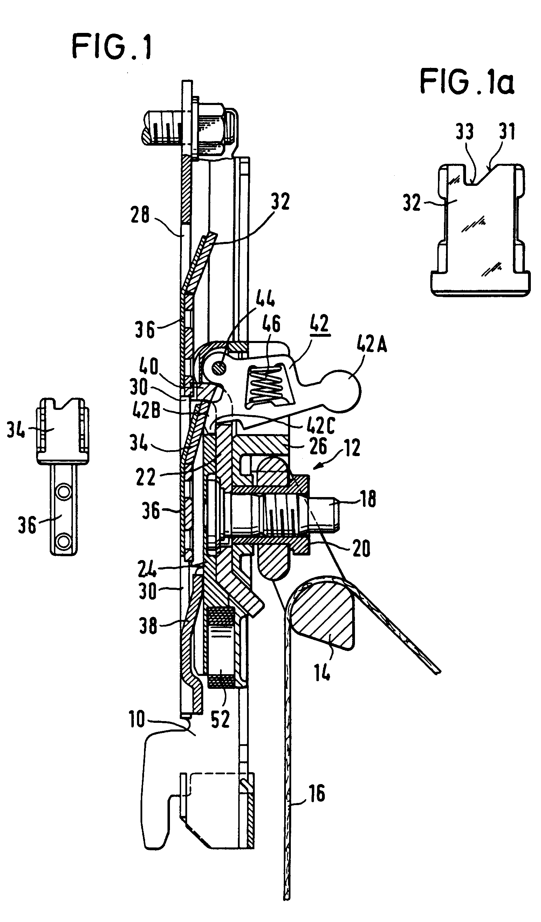

Mit den Klinken 32, 34 und dem Rastelement 38 wirkt ein Rastelement am Verankerungselement 12 zusammen, welches durch ein rechtwinklig von der Platte 22 abgebogenes starres Anschlagteil 40 gebildet ist. Das starre Anschlagteil 40 bewegt sich mit dem verschiebbaren Verankerungselement 12 auf einer linearen Bewegungsbahn, in welche die oberen Kanten der Klinken 32, 34, wenn diese sich in ihrer Raststellung befinden, sowie die obere Kante des Rastelementes 38 hineinragen. In Fig. 1 ist eine Raststellung veranschaulicht, in der das Anschlagteil 40 an der oberen Kante der Klinke 34 lastaufnehmend arretiert wird.

Zur Lösung der Verriegelung in der oberen oder mittleren Raststellung ist ein Löseelement 42 vorgesehen, das als um eine Achse 44 am Gehäuseteil 24 schwenkbar gelagerter zweiarmiger Hebel ausgebildet ist, wovon der eine Arm einen Betätigungshebel 42A bildet, während am anderen Arm sowohl ein Betätigungsansatz 42B als auch ein Blockieransatz 42C gebildet sind. Das Löseelement 42 wird durch eine Feder 46 in die unbetätigte Stellung beaufschlagt. In dieser Stellung liegt der Betätigungsansatz 42B in Anlage an der sich in ihrer Raststellung befindenden Klinke 32 oder 34.

Wie in Fig. 1a gezeigt, weist die Klinke 32 im Bereich ihrer oberen Kante eine Ausnehmung 33 auf, deren eine Seitenwand durch die Rampenfläche 31 begrenzt ist. Bei Betätigung des Löseelementes 42, in dem der Betätigungshebel 42A nach unten gedrückt wird, ausgehend von der in Fig. 1 gezeigten Stellung, drückt der Betätigungsansatz 42B die Klinke 32 oder 34 in ihre Lösestellung, in welcher sie in die entsprechende Öffnung 28 bzw. 30 der Führungsschiene 10 eintaucht, so daß das starre Anschlagteil 40 von dieser Klinke freikommt und eine Abwärtsbewegung des Verankerungselementes 12 möglich ist.

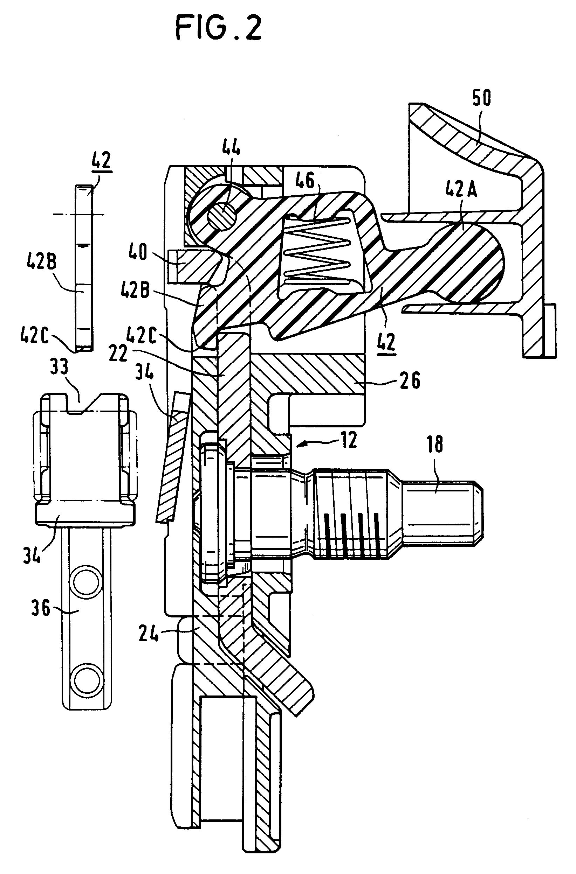

Die bei weiterer Abwärtsbewegung auftretenden Abläufe sind in den Fig. 2 bis 9 veranschaulicht.

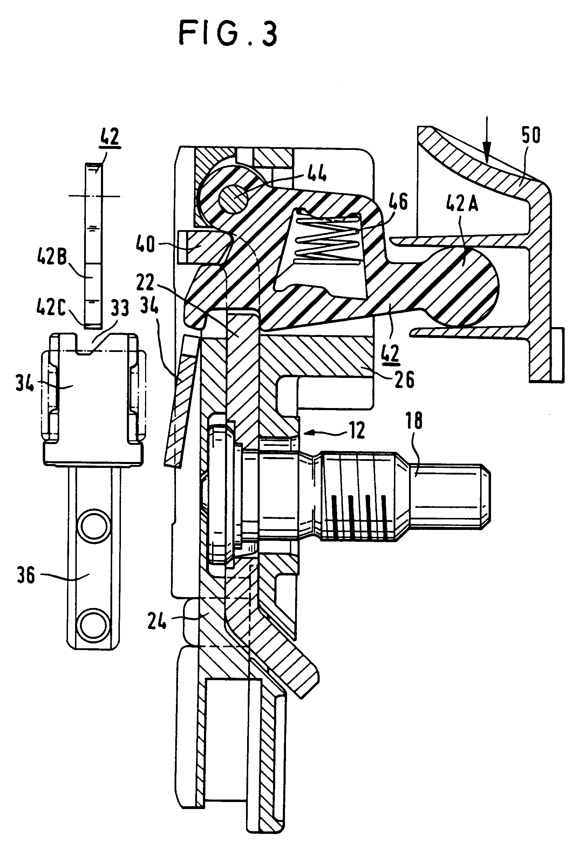

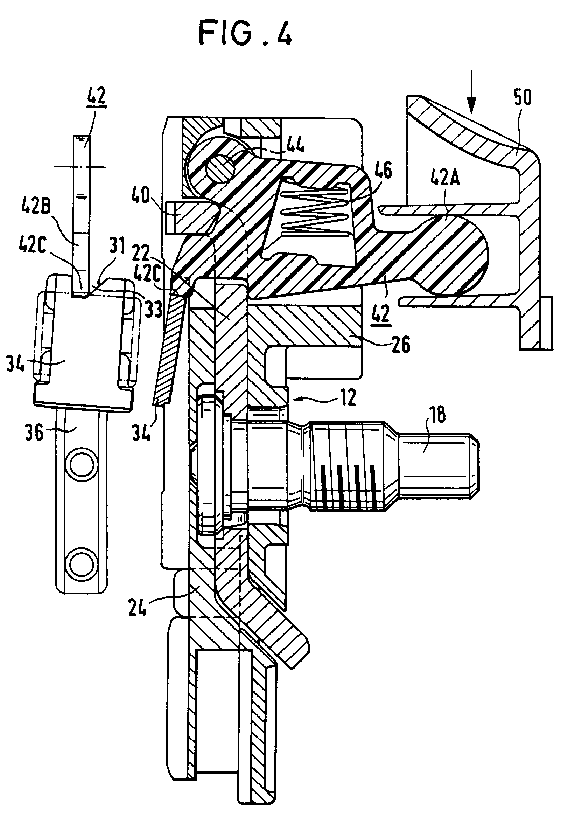

Bei dem in Fig. 2 gezeigten Zustand befindet sich das Verankerungselement 12 in einer Stellung zwischen zwei Raststellungen. Der Blockieransatz 42C liegt noch oberhalb der oberen Kante der darauffolgenden Klinke, die in Fig. 2 als Klinke 34 angenommen wird. In der in Fig. 3 gezeigten Stellung wird auf den Betätigungshebel 42A über ein Verkleidungsteil 50 ein Betätigungsdruck nach unten in Richtung des angegebenen Pfeiles ausgeübt. Durch diesen Betätigungsdruck wird zunächst das gesamte verschiebbare Verankerungselement 12 mit dem Sicherheitsgurtumlenkbeschlag 14 abwärts verlagert. Anschließend (Fig. 4) läuft die untere Kante des Betätigungsansatzes 42C auf der Rampenfläche 31 der Klinke 34 auf, wobei die Klinke 34 seitlich ausweicht, indem die Blattfeder 36 in ihrem Bereich zwischen Klinke 34 und dem oberen Befestigungspunkt an der Führungsschiene 10 elastisch verbogen wird. Sobald der Blockieransatz 42C auf dem Grund der Ausnehmung 33 auftrifft, ist die weitere Abwärtsverschiebung des Löseelementes 42 mit dem Verankerungselement 12 blockiert.

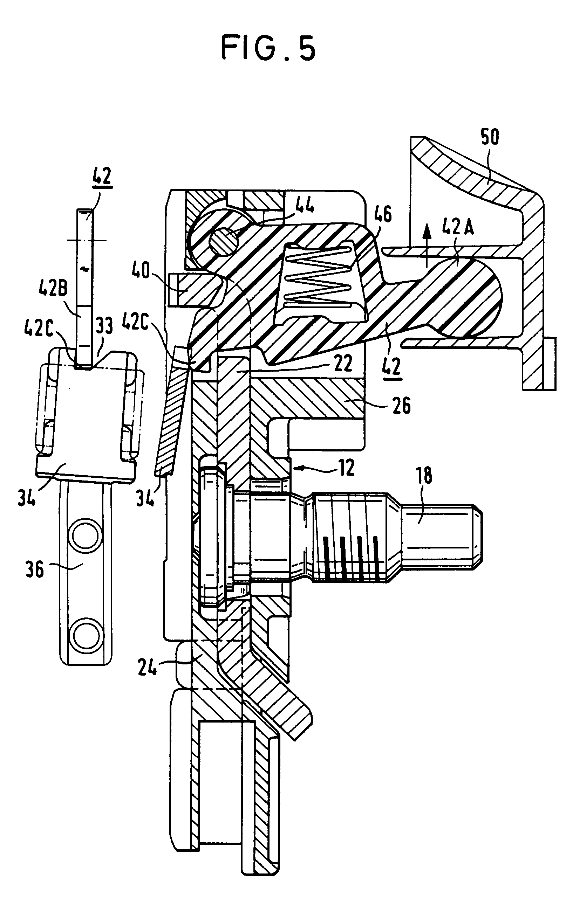

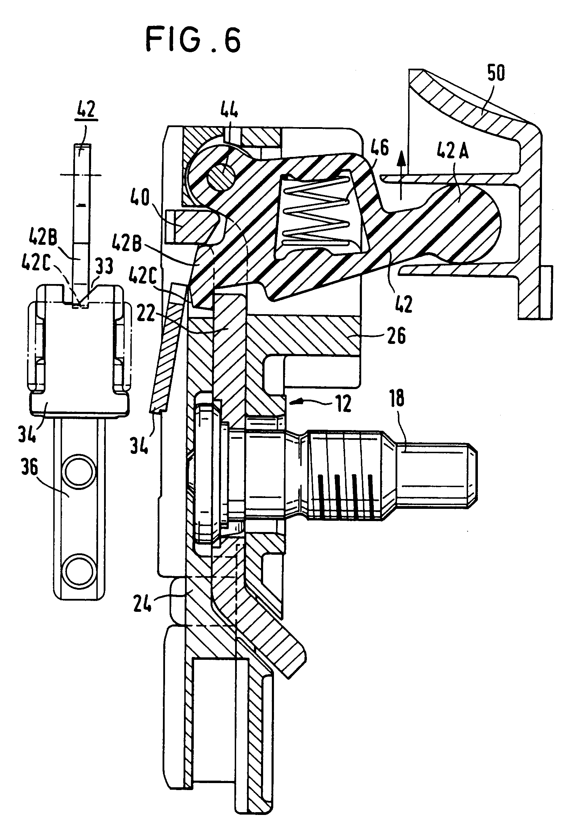

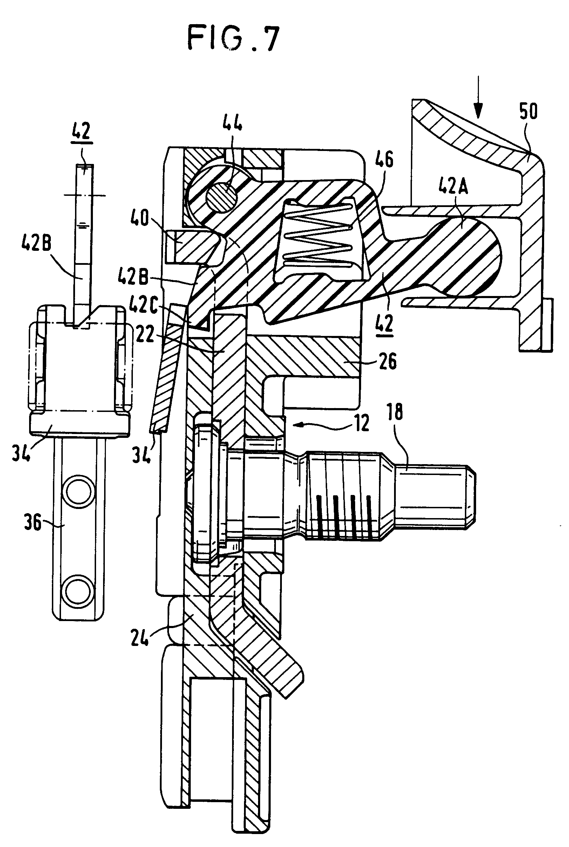

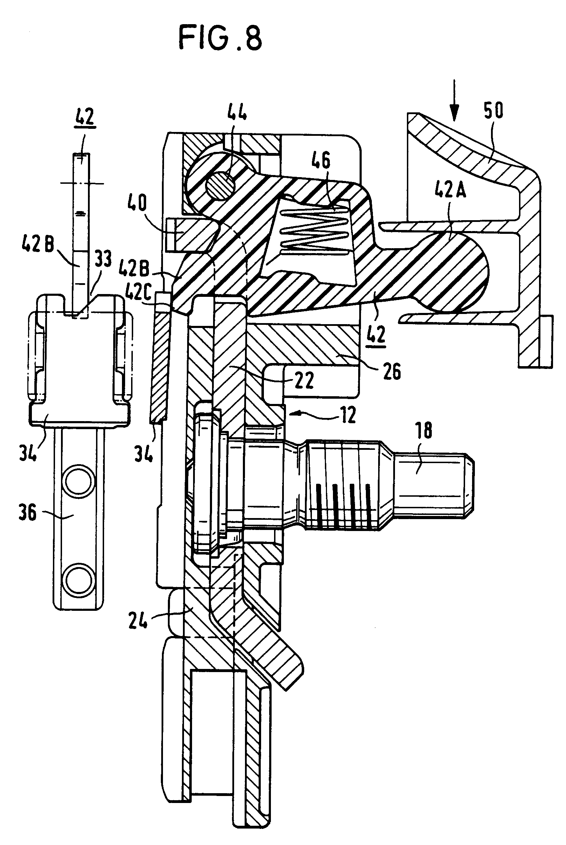

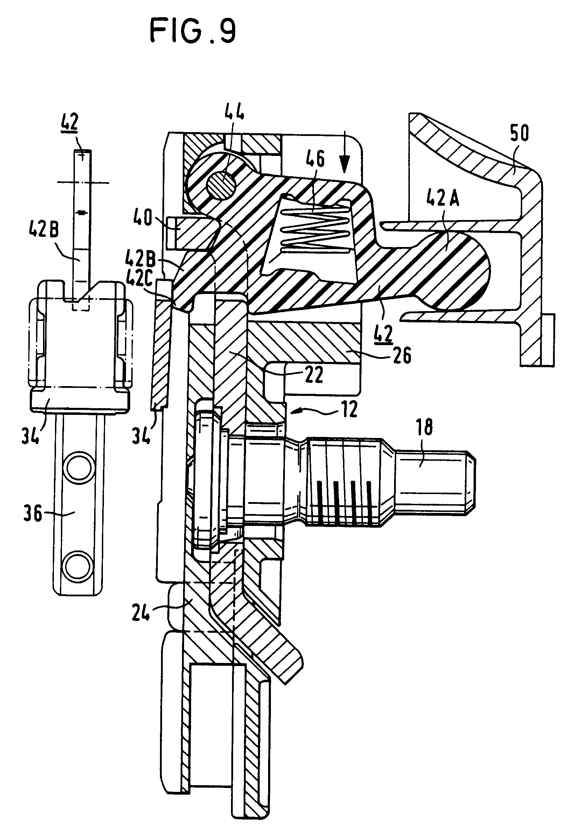

Wenn nun der Benutzer, wie in Fig. 5 gezeigt, den Betätigungshebel 42A freigibt, kehrt dieser in seine unbetätigte Stellung in Richtung des angegebenen Pfeiles zurück. Der Blockieransatz 42C weicht von der Klinke 34 zurück, woraufhin diese in ihre seitlich unausgelenkte Stellung zurückschwenkt (Fig. 6). In dieser Stellung kann der verschiebbare Verankerungsbeschlag 12 mit dem Sicherheitsgurtumlenkbeschlag 14 verbleiben, wenn keine weitere Abwärtsbewegung gewünscht wird. Wird aber eine weitere Abwärtsverschiebung gewünscht, so wird, wie in Fig. 7 gezeigt, erneut ein Betätigungsdruck auf den Betätigungshebel 42A ausgeübt. Der Betätigungsansatz 42B befindet sich nun aber in Gegenüberstellung zu einem Flächenbereich der Klinke 34, der von der Ausnehmung 33 nicht eingenommen wird, so daß dieser Betätigungsansatz 42B auf der die Rampenfläche 31 begrenzenden Teilfläche der Klinke 34 auftrifft und diese Klinke, wie in Fig. 8 gezeigt, in ihre Lösestellung verschwenkt, in welcher sie in die zugehörige Ausnehmung 30 (Fig. 1) der Führungsschiene 10 eintaucht und den Weg für die weitere Abwärtsbewegung freigibt. In Fig. 9 ist die Stellung gezeigt, die der in Fig. 1 gezeigten Stellung vorausgeht.

Wie sich aus der obigen Beschreibung ergibt, ist ein unbeabsichtigtes Überspringen einer Raststellung prinzipiell ausgeschlossen. Dies bedeutet, daß ein zielsicheres und leichtes Einstellen auf die jeweils nächstniedrigere Raststellung gewährleistet ist.

Die beschriebene Ausführungsform weist noch mehrere Besonderheiten auf. So ist am unteren Ende der beiden Gehäuseteile 24, 26 eine nach unten offene, teilzylindrische Aussparung gebildet, die eine spiralförmig aufgewickelte Feder 52 aufnimmt. Das freie Ende dieser Feder 52 ist an geeigneter Stelle der Führungsschiene 10 eingehängt. Die Feder 52 übt eine nach oben gerichtete Zugspannung auf das Verankerungselement 12 aus, um die nach unten gerichtete Zugspannung zu kompensieren, die durch den Sicherheitsgurt 16 ausgeübt wird.

Die Anzahl der vorgesehenen Raststellungen richtet sich nach dem jeweiligen Bedarf. In der untersten Stellung wird jeweils keine verschwenkbare Klinke wie die Klinken 32, 34, sondern lediglich ein starres Rastelement wie das Rastelement 38 benötigt. Um die Bewegung des Verankerungselementes 12 nicht zu behindern, ist das starre Rastelement 38 mit einem mittigen Längsschlitz versehen, in den das verschwenkbare Löseelement 42 eintauchen kann.

Die beschriebene Vorrichtung besteht aus wenigen einfachen und leicht zu montierenden Bauteilen, so daß also das angestrebte zielsichere und leichte Auffinden der jeweils nächsttieferen Raststellung ohne besonderen Aufwand erreicht wird.

## Patentansprüche

1. Vorrichtung zur Höhenverstellung eines Sicherheitsgurtbeschlages in Kraftfahrzeugen, mit einer zur Befestigung am Fahrzeug eingerichteten lastaufnehmenden Führungsschiene (10), einem in dieser Führungsschiene (10) verschiebbar aufgenommenen Verankerungselement (12), an dem der Sicherheitsgurtbeschlag (14) befestigt ist, und einer Rastvorrichtung aus mehreren in Längsrichtung der Führungsschiene beabstandeten Rastelementen (32, 34, 38), einem mit diesen zusammenwirkenden Rastelement (40) am Verankerungselement (12) und einem im betätigten Zustand die Verrastung zwischen den Rastelementen (32, 34, 40) aufhebenden Löseelement(42), **dadurch gekennzeichnet,** daß das Löseelement (42) einen Blockieransatz (42C) aufweist, der im betätigten Zustand des Löseelementes (42) und bei Abwärtsverschiebung des Verankerungselementes (12) eine Bahn beschreibt, die auf das jeweils nächsttiefere der Rastelemente (32, 34, 38) der Führungsschiene (10) trifft, welche mit Ausnahme des untersten Rastelementes (38) jeweils als gegen Federkraft aus der normalen Raststellung in eine Lösestellung bewegbare Klinke (32, 34) ausgebildet sind, daß der Blockieransatz (42C) im betätigten Zustand des Löseelementes (42) und bei Abwärtsverschiebung desselben auf eine Rampenfläche (31) einer bewegbaren Klinke (32, 34) trifft, daß jede der bewegbaren Klinken (32, 34) quer zur Richtung der Abwärtsverschiebung federelastisch auslenkbar gelagert ist und durch Auflaufen des Blockieransatzes (42C) seitlich ausgelenkt wird, und daß der Blockieransatz (42C) im umbetätigten Zustand des Löseelementes (42) von der Klinke (32, 34) zurückweicht, woraufhin diese in ihre seitlich unausgelenkte Stellung zurückkehrt, und bei erneuter Betätigung des Löseelementes (42) ein Betätigungsansatz (42B) desselben die Klinke (32, 34) in ihre Lösestellung drückt und den Weg für eine weitere Abwärtsverschiebung freigibt.

2. Vorrichtung nach Anspruch 1, **dadurch gekennzeichnet,** daß das Rastelement (40) des verschiebbaren Verankerungselementes (12) als starres Anschlagteil (40) ausgebildet ist, in dessen Bewegungsbahn die Klinken (32, 34) in ihrer Raststellung hineinragen.

3. Vorrichtung nach einem der vorstehenden Ansprüche, **dadurch gekennzeichnet,** daß das Löseelement (42) als am Verankerungselement (12) schwenkbar gelagerter Hebel ausgebildet ist.

4. Vorrichtung nach Anspruch 3, **dadurch gekennzeichnet,** daß das Löseelement (42) einen Betätigungsarm (42A) und einen weiteren Arm aufweist, an dem der Blockieransatz (42C) gebildet ist.

5. Vorrichtung nach Anspruch 4, **dadurch gekennzeichnet,** daß der Blockieransatz (42C) und der Betätigungsansatz (42B) an demselben Arm des Löseelementes (42) angeordnet sind.

6. Vorrichtung nach einem der Ansprüche 3 bis 5, **dadurch gekennzeichnet,** daß der Schwenkbereich des Löseelementes (42) durch Anschläge (48) begrenzt ist.

7. Vorrichtung nach einem der vorstehenden Ansprüche, **dadurch gekennzeichnet,** daß das unterste Rastelement (38) der Führungsschiene (10) als starres, in den Innenraum der Führungsschiene ausgestelltes Rastelement ausgebildet ist.

8. Vorrichtung nach einem der vorstehenden Ansprüche, **dadurch gekennzeichnet,** daß die bewegbaren Klinken (32, 34) als flache Platten ausgebildet sind, die durch ein elastisches Rückstell- und Halterungsteil in zwei zueinander senkrechten Richtungen quer zur Richtung der Abwärtsverschiebung auslenkbar gelagert sind.

9. Vorrichtung nach Anspruch 8, **dadurch gekennzeichnet,** daß die bewegbaren Klinken (32, 34) sich unter Last mit ihrer unteren Kante auf einer Abstützfläche einer Ausnehmung abstützen, die in der Führungsschiene (10) gebildet ist und in welche die Klinken unter dem Druck, der durch den Betätigungsansatz (42B) auf sie ausgeübt wird, zurückweichen.

10. Vorrichtung nach einem der vorstehenden Ansprüche, **dadurch gekennzeichnet,** daß die Rampenfläche (31) in einer Ausnehmung an der Oberseite der bewegbaren Klinken (32, 34) gebildet ist und der Blockieransatz (42) bei der Abwärtsverschiebung des Löseelementes (42) in diese Ausnehmung eintaucht.

## Claims

1. Means for vertical adjustment of a safety belt fitting in motor vehicles comprising a loadbearing guide rail (10) adapted to be mounted on the vehicle, an anchoring element (12) which is displaceably received in said guide rail (10) and to which the safety belt fitting (14) is secured, and a detent means comprising a plurality of detent elements (32, 34, 38) spaced apart in the longitudinal direction of the guide rail, a detent element (40) on the anchoring element (12) cooperating with said detent elements and a release element (42) cancelling in the actuated state the interlocking between the detent elements (32, 34, 40), **characterized in that** the release element (42) comprises a blocking lug (42C) which in the actuated state of the release element (42) and on downward displacement of the anchoring element (12) describes a path which meets the respective next lower of the detent elements (32, 34, 38) of the guide rail (10) which with the exception of the lowermost detent element (38) are each constructed as pawl (32, 34) movable against spring force out of the normal detent position into a release position, that the blocking lug (42C) in the actuated state of the release element (42) and on downward displacement thereof meets a ramp face (31) of a movable pawl (32, 34), that each of the movable pawls (32, 34) is mounted resiliently deflectably transversely of the direction of the downward movement and is deflected laterally by runup of the blocking lug (42C) and that the blocking lug (42C) in the unactuated state of the release element (42) moves back from the pawl (32, 34), whereupon the latter returns to its laterally undeflected position, and on renewed actuation of the release element (42) an actuating lug (42B) thereof presses the pawl (32, 34) into its release position and releases the path for a further downward displacement.

2. Means according to claim 1, **characterized in that** the detent element (40) of the displaceable anchoring element (12) is formed as rigid stop member (40) into the path of movement of which the pawls (32, 34) project in their detent position.

3. Means according to any one of the preceding claims, **characterized in that** the release element (42) is formed as lever pivotally mounted on the anchoring element (12).

4. Means according to claim 3, **characterized in that** the release element (42) comprises an actuating arm (42A) and a further arm on which the blocking lug (42C) is formed.

5. Means according to claim 4, **characterized in that** the blocking lug (42C) and the actuating lug (42B) are arranged on the same arm of the release element (42).

6. Means according to any one of claims 3 to 5, **characterized in that** the pivot range of the release element (42) is limited by stops (48).

7. Means according to any one of the preceding claims, **characterized in that** the lowermost detent element (38) of the guide rail (10) is formed as rigid detent element projecting into the interior of the guide rail.

8. Means according to any one of the preceding claims, **characterized in that** the movable pawls (32, 34) are formed as flat plates which are mounted by a resilient reset and holding member deflectably in two directions perpendicular to each other transversely of the direction of the downward displacement.

9. Means according to claim 8, **characterized in that** the movable pawls (32, 34) under load bear with their lower edge on a support face of a recess which is formed in the guide rail (10) and into which the pawls retreat under the pressure which is exerted on them by the actuating lug (42B).

10. Means according to any one of the preceding claims, **characterized in that** the ramp face is formed in a recess at the upper side of the movable pawls (32, 34) and the blocking lug (42) on downward displacement of the release element (42) penetrates into said recess.

## Revendications

1. Dispositif d'ajustage en hauteur d'une ferrure de ceinture de sécurité dans des véhicules automobiles, comportant un rail de guidage (10) sollicité en charge et aménagé pour être fixé sur le véhicule, un élément d'ancrage (12) logé de manière coulissante dans ce rail de guidage(10), sur lequel la ferrure de ceinture de sécurité (14) est fixée, et un dispositif de verrouillage consistant en plusieurs éléments de verrouillage (32, 34, 38) espacés en direction longitudinale du rail de guidage, un élément de verrouillage (40) coopérant avec ceux-ci sur l'élément d'ancrage (12) et un élément de désengagement (42) éliminant à l'état actionné le verrouillage entre les éléments de verrouillage (32, 34, 40), caractérisé en ce que l'élément de désengagement (42) comporte un épaulement de blocage (42C) décrivant, à l'état actionné de l'élément de désengagement (42) et lors du déplacement vers le bas de l'élément d'ancrage (12), une trajectoire rencontrant à chaque fois le prochain plus bas des éléments de verrouillage (32, 34, 38) du rail de guidage (10), lesquels sont, à l'exception de l'élément de verrouillage le plus bas (38), formés chacun en tant que loquet (32, 34) mobile de la position de verrouillage normale dans une position de désengagement contre la force de ressort, en ce que l'épaulement de blocage (42C) touche à l'état actionné de l'élément de désengagement (42) et lors du déplacement vers l'avant de celui-ci, une surface de rampe (31) d'un loquet mobile (32, 34), en ce que chacun des loquets mobiles (32, 34) est monté de manière à pivoter élastiquement et transversalement par rapport à la direction du déplacement vers le bas et est pivoté latéralement en butée avec l'épaulement de blocage (42C), et en ce que l'épaulement de blocage (42C) se retire à l'état non-actionné de l'élément de désengagement (42) du loquet (32, 34), celle-ci revenant alors dans sa position latérale non-pivotée, et lors d'un nouvel actionnement de l'élément de désengagement (42), un épaulement d'actionnement (42B) de celui-ci presse le loquet (32, 34) dans sa position de désengagement et libère le chemin pour un autre déplacement vers le bas.

2. Dispositif selon la revendication 1, caractérisé en ce que l'élément de verrouillage (40) de l'élément d'ancrage décalable (12) est réalisé en tant qu'élément de butée (40) fixe, dans la trajectoire de mouvement duquel les loquets (32, 34) pénètrent dans leur position de verrouillage.

3. Dispositif selon l'une des revendications précédentes, caractérisé en ce que l'élément de désengagement (42) est réalisé en tant que levier monté pivotant sur l'élément d'ancrage (12).

4. Dispositif selon la revendication 3, caractérisé en ce que l'élément de désengagement (42) comporte un bras d'actionnement (42A) et un autre bras sur lequel est formé l'épaulement de blocage (42C).

5. Dispositif selon la revendication 4, caractérisé en ce que l'épaulement de blocage (42C) et l'épaulement d'actionnement (42B) sont agencés sur le même bras de l'élément de désengagement (42).

6. Dispositif selon l'une des revendications 3 à 5, caractérisé en ce que la zone de pivotement de l'élément de désengagement (42) est limitée par des butées (48).

7. Dispositif selon l'une des revendications précédentes, caractérisé en ce que l'élément de verrouillage le plus bas (38) du rail de guidage (10) est réalisé en tant qu'élément de verrouillage fixe placé à l'intérieur du rail de guidage.

8. Dispositif selon l'une des revendications précédentes, caractérisé en ce que les loquets mobiles (32, 34) sont réalisés en tant que plaques plates montées à pivotement dans deux directions perpendiculaires entre elles et transversalement par rapport à la direction de décalage vers le bas, par un élément élastique de fixation et de rappel.

9. Dispositif selon la revendication 8, caractérisé en ce que les loquets mobiles (32, 34) s'appuyent sous la charge par leur côté inférieur sur une surface d'appui d'un évidement formé dans le rail de guidage (10) et dans lequel les loquets s'effacent sous la pression exercée sur elles par l'épaulement d'actionnement (42B).

10. Dispositif selon l'une des revendications précédentes, caractérisé en ce que la surface de rampe (31) est formée dans un évidement se trouvant sur la face supérieure des loquets mobiles (32, 34) et l'épaulement de blocage (42) plonge dans cet évidement lors du décalage vers le bas de l'élément de désengagement (42).
